(19) Europäisches Patentamt / European Patent Office / Office européen des brevets

(11) **EP 2 215 517 B1**

(12) **EUROPÄISCHE PATENTSCHRIFT**

(45) Veröffentlichungstag und Bekanntmachung des Hinweises auf die Patenterteilung:
**07.07.2021  Patentblatt 2021/27**

(21) Anmeldenummer: **08846726.1**

(22) Anmeldetag: **06.11.2008**

(51) Int Cl.:
*G02F 1/33* (2006.01)    *G02F 1/11* (2006.01)
*G02B 21/00* (2006.01)

(86) Internationale Anmeldenummer:
**PCT/EP2008/065052**

(87) Internationale Veröffentlichungsnummer:
**WO 2009/060027 (14.05.2009 Gazette 2009/20)**

(54) **VORRICHTUNG UND VERFAHREN ZUR ANSTEUERUNG EINES AKUSTOOPTISCHEN BAUTEILS**

APPARATUS AND METHOD FOR OPERATING AN ACOUSTOOPTICAL COMPONENT

DISPOSITIF ET PROCÉDÉ POUR LA COMMANDE D'UN COMPOSANT ACOUSTO-OPTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.11.2007  DE 102007053199**

(43) Veröffentlichungstag der Anmeldung:
**11.08.2010  Patentblatt 2010/32**

(73) Patentinhaber: **Leica Microsystems CMS GmbH
35578 Wetzlar (DE)**

(72) Erfinder: **SEYFRIED, Volker
69226 Nussloch (DE)**

(74) Vertreter: **Schaumburg und Partner
Patentanwälte mbB
Postfach 86 07 48
81634 München (DE)**

(56) Entgegenhaltungen:
**EP-A- 1 591 825    DE-A1- 19 827 140
US-A- 4 272 825    US-A1- 2004 105 485**

EP 2 215 517 B1

**Beschreibung**

Die Erfindung betrifft eine Vorrichtung zur Ansteuerung eines akustooptischen Bauteils zum Beeinflussen hindurchtretenden Lichts, insbesondere zum Beeinflussen des Beleuchtungslichts und/oder des Detektionslichts im Strahlengang eines Mikroskops, vorzugsweise eines konfokalen Laserscanmikroskops, mit einem Radiofrequenzgenerator zur Versorgung des akustooptischen Bauteils mit einer Radiofrequenz. Des Weiteren betrifft die Erfindung ein entsprechendes Verfahren sowie Verwendungen bzw. Anwendungen sowohl der Vorrichtung als auch des Verfahrens.

Es geht hier grundsätzlich um die Ansteuerung akustooptischer Bauteile zum Beeinflussen hindurchtretenden Lichts. Solche Bauteile umfassen üblicherweise einen akustooptischen Kristall, an dem ein elektrischer Transducer vorgesehen ist. Der Transducer besteht üblicherweise aus einem piezoelektrischen Material und einer darüber und darunter liegenden Elektrode. Durch elektrisches Beschalten der beiden Elektroden mit Radiofrequenzen, die üblicherweise im Bereich zwischen 30 MHz und 800 MHz liegen, wird das piezoelektrische Material in Schwingung versetzt, so dass eine akustische Welle (Schallwelle) entsteht, die aufgrund der Anordnung des Transducers den Kristall durchläuft. Die Schallwelle wird nach Durchlaufen des optischen Wechselwirkungsgebiets an der gegenüberliegenden Kristallseite üblicherweise absorbiert oder wegreflektiert. Akustooptische Kristalle, wie sie bei den hier in Rede stehenden akustooptischen Elementen Anwendung finden, zeichnen sich dadurch aus, dass die entstehende Schallwelle die optische Eigenschaft des Kristalls verändert, wobei durch den Schall ein optisches Gitter oder eine vergleichbare optisch aktive Struktur, beispielsweise in Form eines Hologramms, induziert wird. Durch den Kristall hindurchtretendes Licht erfährt an dem so entstehenden optischen Gitter eine Beugung, wobei das Licht in verschiedene Beugungsordnungen oder Beugungsrichtungen gelenkt wird.

Bei den hier in Rede stehenden akustooptischen Bauteilen unterscheidet man zwischen Bauteilen, die das gesamte einfallende Licht mehr oder weniger unabhängig von der Wellenlänge beeinflussen (z.B. AOM, AOD und Frequency Shifter) und Bauteilen, die beispielsweise in Abhängigkeit der Radiofrequenzen selektiv auf einzelne Wellenlängen wirken (z.B. AOTFs).

Häufig bestehen die akustooptischen Elemente aus doppelbrechenden Kristallen, wie beispielsweise Tellurdioxid, wobei die Lage der Kristallachse relativ zur Einfallebene des Lichts und seiner Polarisation die optischen Eigenschaften des akustooptischen Elements bestimmt.

Bei konkreten Anwendungen wird wahlweise das durch die Beugung unbeeinflusste Licht, das in verschiedene Beugungsordnungen abgelenkte Licht oder sowohl das unbeeinflusste als auch das abgelenkte Licht genutzt.

Bei den aus der Praxis bekannten akustooptischen Bauteilen wird die Radiofrequenz (RF) üblicherweise über ein Koaxialkabel dem akustooptischen Bauteil zugeführt. Dort erfolgt auf einer Elektronikplatine eine Impedanzanpassung, wobei zu beachten ist, dass es zu keinen RF-Reflexionen kommt. Es soll möglichst viel RF-Leistung zum Kristall gelangen, der üblicherweise eine andere Impedanz als das RF-Kabel hat. Von der Elektronikplatine wird die Radiofrequenz zum Transducer auf dem Kristall weitergeleitet, wo die akustische Welle erzeugt wird.

In der Vergangenheit wurden die hier in Rede stehenden akustooptischen Bauteile, vor allem bei AOTFs, meist dazu verwendet, Lichtintensitäten einzustellen und zu regeln. Neuerdings besteht der Bedarf, entsprechende Bauteile zum "Ausschneiden" von bestimmten Anteilen des Lichts aus einem mehr oder weniger spektral breitbandigen Licht zu nutzen. Dazu sei lediglich beispielhaft auf die DE 101 15 488 A1 verwiesen.

Die hier in Rede stehenden akustooptischen Bauteile dienen im Rahmen der zuvor angesprochenen Verwendungen vor allem zum Ausschneiden bestimmter spektraler Anteile einer kontinuierlichen oder breitbandigen Lichtquelle zu Beleuchtungszwecken. Dazu sei lediglich beispielhaft auf die Verwendung in Verbindung mit Weißlichtlasern, Breitbandlasern, Ultrakurzpulslasern, Superluminiszenz-LEDs oder anderen Superluminiszenzlichtquellen, ASE-Lichtquellen, Glühbirnen, Point-Source-LEDs und anderen LEDs, Sonnen- oder Sternenlicht, etc. verwiesen. Auch dienen die optischen Bauteile zum Ausschneiden bestimmter spektraler Lichtanteile zu Detektionszwecken, beispielsweise zum Einsatz in programmierbaren spektralen Filtern. Auch die Verwendung des akustooptischen Bauteils innerhalb eines programmierbaren Strahlteilers (AOBS) ist von Bedeutung. Aus der Praxis ist es des Weiteren bekannt, dass die hier in Rede stehenden akustooptischen Bauteile im Temperaturverlauf ihr Verhalten ändern, wobei dies hauptsächlich auf eine Änderung der Schallgeschwindigkeit im Kristall zurückzuführen ist. Will man das akustooptische Bauteil bei sich ändernden Temperaturen verwenden, ist eine Kompensation des durch die Temperaturänderung hervorgerufenen Verhaltens erforderlich. Entsprechende Kompensationsmethoden sind bereits bekannt. Dort wird vorgeschlagen, den den Temperaturschwankungen ausgesetzten Kristall zu heizen oder zu kühlen, um nämlich eine Temperaturstabilisierung am Kristall hervorzurufen. Dazu ist eine besondere Temperaturregelung vorgesehen. Insoweit sei ebenso auf die EP 0 834 762 A2 verwiesen, wonach eine Art Dummy-Radiofrequenz vorgesehen ist, die immer dann eingespeist wird, wenn die eigentliche Radiofrequenz ausgeschaltet ist, so dass stets die gleiche Wärme im Kristall über eine Heizung deponiert werden kann.

Alternativ zu der voranstehend genannten Methode wird die Radiofrequenz entsprechend einer gemessenen Temperaturänderung gemäß der DE 198 27 140 C2 nachgeführt. Dabei ist man jedoch bislang davon ausgegangen, dass der relevante Kompensationsparameter wie auch die Radiofrequenz selbst, die zum Betreiben des akustooptischen Bauteils notwendig ist, von unzähligen Parametern abhängt, beispielsweise von der Wellenlänge des abzulenkenden Lichts, vom Einfallwinkel des Lichts in den Kristall, von den Einbaubedingungen des Kristalls, etc. Daher bestimmte man bisher den Betrag der Frequenzänderung iterativ experimentell oder legte Tabellen für die Kompensationsparameter in Abhängigkeit von der Wellenlänge und von aparativen Bedingungen an. Dabei ist es erforderlich gewesen, die Kompensationsparameter für jedes einzelne Gerät individuell zu bestimmen. Insoweit sei insbesondere auf Abschnitt [0014] der DE 198 27 140 C2 verwiesen.

Der im Rahmen der Fehlerkompensation zu betreibende Aufwand gemäß druckschriftlichem Stand der Technik ist beachtlich, da für jede verwendete Laserwellenlänge und ggf. für jedes zum Einsatz kommende System besondere Korrekturparameter zu speichern und zu handhaben sind. Obendrein ist es erforderlich, die Treiberelektronik mit Informationen zu versorgen, um nämlich zu definieren, welche konkrete Laserwellenlänge und welche experimentellen Parameter vorliegen, um den darauf bezogenen Kompensationsparameter einsetzen zu können. Folglich kann gemäß druckschriftlichem Stand der Technik die Temperaturkompensation nicht direkt vom Radiofrequenzgenerator vorgenommen werden, muss vielmehr von einer höheren Bedienebene unterstützt oder gar insgesamt vorgenommen werden, da nämlich zur Temperaturkompensation die insgesamt erforderlichen Systeminformationen liquide sein müssen. Dies steht einer einfachen Bedienbarkeit des Systems sowie einer schnellen Temperaturstabilisierung auf kleinen Zeitskalen entgegen. So ist es beispielsweise erforderlich, bei einem Konfokalmikroskop eine höhere Software-Ebene vorzusehen, die über Informationen verfügt, welche Laserwellenlängen gerade vom Kristall abzulenken sind, die die erforderlichen Kompensationsparameter für den Radiofrequenzgenerator zur Verfügung stellt, so dass der Radiofrequenzgenerator die Frequenznachführung korrekt vornehmen kann. Entsprechend wird die Temperaturkompensation gemäß druckschriftlichem Stand der Technik nicht vom Radiofrequenzgenerator sondern von dem ihn ansteuernden Computer durchgeführt, der dem Radiofrequenzgenerator bereits temperaturkompensierte Radiofrequenz-Sollwerte - meist unveränderbar - vorgibt. Dies führt zu einer enormen Komplexität und Fehleranfälligkeit des gesamten Systems.

Im Lichte der voranstehenden Ausführungen liegt der vorliegenden Erfindung die Aufgabe zugrunde, eine Vorrichtung sowie ein Verfahren der gattungsbildenden Art derart auszugestalten und weiterzubilden, dass bei sich ändernden Temperaturen ein fehlerfreier automatischer Betrieb bei einfacher Konstellation des Systems möglich ist. Außerdem soll der Benutzer keinerlei Entscheidungen in Bezug auf etwaige Einstellungen bzw. Parameter zur temperaturabhängigen Fehlerkompensation treffen müssen.

Aus der Druckschrift EP 1 591 825 A ist ein Mikroskop mit mehreren Lichtquellen bekannt, denen jeweils ein akustooptisches Element zugeordnet ist. Sämtliche akustooptische Elemente sind auf einer gemeinsamen Achse angeordnet und ausgebildet, das von den verschiedenen Lichtquellen ausgegebene Licht in die gemeinsame optische Achse einzukoppeln.

Die Druckschrift US-A1-2004/0105485 offenbart eine Vorrichtung zur Ansteuerung eines akustooptischen Bauteils, bei der ein Temperatursensor die Temperatur an dem akustooptischen Bauteil erfasst und ein die Temperatur angebendes Signal an einen Prozessor sendet. Der Prozessor generiert in Erwiderung auf das empfangene Signal ein Steuersignal und gibt dieses Steuersignal an einen Oszillator aus, der mit dem akustooptischen Bauteil gekoppelt ist und die an dem Bauteil angelegte Radiofrequenz entsprechend dem Steuersignal ändert.

Die Druckschrift US-A1-4272825 offenbart ebenfalls eine Vorrichtung, bei der ein akustooptisches Bauteil in Abhängigkeit der Temperatur zur Kompensation von Wellenlängenschwankungen gesteuert wird.

Die voranstehende Aufgabe wird durch die Merkmale der nebengeordneten Patentansprüche 1 und 5 gelöst, nämlich zum einen in Bezug auf die erfindungsgemäße Vorrichtung und zum anderen in Bezug auf das erfindungsgemäße Verfahren.

In erfindungsgemäßer Weise ist erkannt worden, dass sich temperaturschwankungsbedingte Fehlfunktionen des akustooptischen Bauteils in einfacher und dabei idealer Weise durch Anpassung der Radiofrequenz kompensieren lassen. Diese Erkenntnis ist für die Fachwelt überraschend, geht man von dem im einschlägigen Stand der Technik betriebenen Aufwand aus. Vor allem ist überraschend, dass der für die Radiofrequenz-Nachführung notwendige Kompensationsparameter (in kHz/°C) nur scheinbar willkürlich von allen möglichen Systemparametern abhängt, so beispielsweise von der Wellenlänge des abzulenkenden Lichts, vom Einfallwinkel des Lichts in den Kristall, von den Einbaubedingungen des Kristalls, etc. Ungeachtet der zuvor genannten Abhängigkeiten ist es nämlich möglich, dass die Kompensationsparameter direkt und alleine mit der einzustellenden Radiofrequenz verknüpft werden, wobei die Radiofrequenz ihrerseits tatsächlich auf komplexe Weise von zahlreichen Parametern abhängt. Die hier zugrunde liegende Verknüpfung zur Vorgabe eines geeigneten Kompensationsparameters folgt einer äußerst einfachen, im Wesentlichen bis auf kleine Korrekturen linearen mathematischen Beziehung.

Die voranstehende genannte erfindungsgemäße Erkenntnis hat in Bezug auf die beanspruchte Vorrichtung sowie in Bezug auf das beanspruchte Verfahren ganz erhebliche Konsequenzen. So ist es in erfindungsgemäßer Weise möglich, alleine aus der für den Radiofrequenzgenerator vorgesehenen Radiofrequenz direkt den dazu passenden Kompensationswert (in kHz/°C) zu ermitteln. Mit anderen Worten lässt sich der Radiofrequenzgenerator alleine durch Kenntnis der Output-Radiofrequenz entsprechend der am akustooptischen Bauteil anliegenden Temperatur nachführen.

Die der Erfindung zugrunde liegende Erkenntnis bedeutet für den Benutzer eine erhebliche Erleichterung, da er sich beim Betrieb des jeweiligen Systems nicht um die im Bereich des akustooptischen Bauteils herrschende Temperatur, insbesondere nicht um die Kristall-Temperatur, kümmern muss. Sogar das Einkalibrieren des Systems auf die richtigen Radiofrequenzen zum Betreiben der jeweiligen akustooptischen Bauteile kann ebenfalls unter den Bedingungen der erfindungsgemäßen Temperaturkompensation erfolgen, so dass der Benutzer stets die richtigen Radiofrequenzen bezogen auf eine definierte Norm-Temperatur einstellt, und zwar unabhängig davon, welche Temperatur zum Zeitpunkt der Kalibrierung tatsächlich am akustooptischen Bauteil vorliegt.

Der mathematische Zusammenhang zwischen der erwünschten Radiofrequenz bei definierter Temperatur und dem zugehörigen Kompensationskoeffizient ergibt sich in vorteilhafter Weise wie folgt:

$$\text{Kompensationskoeffizient (kHz/°C)} = a0 + a1*RF + a2+RF2 + a3*RF3 + \dots + an*RFn.$$

Hierbei kann typischerweise n sehr klein gewählt werden (vorzugsweise n<5, aber sogar n=1 liefert bereits eine hervorragende Temperaturkompensation). Meist sogar a0 nahezu 0, so dass auch dieser Koeffizient weggelassen werden kann und im Extremfall sogar nur ein einziger Koeffizient im Radiofrequenzgenerator gespeichert werden muss. In der Regel kann man mit einem bis höchstens 5 Koeffizienten auskommen. Dies ist auch vom Datenumfang wesentlich einfacher als bei den individuell einzukalibrierenden Tabellen gemäß druckschriftlichem Stand der Technik.

In vorteilhafter Weise erfolgt die Anpassung der Radiofrequenz, ausgehend von einer Soll-Radiofrequenz, in Abhängigkeit von der unmittelbar am akustooptischen Bauteil ermittelbaren Temperatur. Geht man davon aus, dass das akustooptische Bauteil einen in den optischen Eigenschaften veränderbaren Kristall umfasst, ist es von weiterreichendem Vorteil, wenn ein Temperatursensor vorgesehen ist, über den die Temperatur direkt am Kristall ermittelbar ist. Entsprechend wird ein der Ist-Temperatur am akustooptischen Bauteil entsprechendes Signal dem Radiofrequenzgenerator zugeführt, so dass unmittelbar dort eine Temperaturkompensation bei einfachster linearer Beziehung der erwünschten Radiofrequenz unter Berücksichtigung der tatsächlichen Temperatur stattfinden kann.

Wie bereits zuvor erwähnt, bietet die erfindungsgemäße Vorrichtung den enormen Vorteil, dass der zur Anpassung der Radiofrequenz dienende Kompensationskoeffizient ausschließlich auf der Temperatur des akustooptischen Bauteils und der Soll-Radiofrequenz ermittelbar ist. So lässt sich am akustooptischen Bauteil kontinuierlich die Ist-Temperatur ermitteln. Dabei ist es denkbar, dass ein der Ist-Temperatur entsprechendes Signal unmittelbar dem Radiofrequenzgenerator oder einem vorgeschalteten Prozessor zugeleitet wird. Wird die Ist-Temperatur einem vorgeschalteten Prozessor zugeführt, dient dieser zur Erzeugung eines Steuersignals für den Radiofrequenzgeber. Folglich dient das vom Prozessor zur Verfügung gestellte Steuersignal zur Erzeugung einer Radiofrequenz auf Grundlage der jeweiligen Temperatur am akustooptischen Bauteil.

In besonders einfacher Weise ist es auch möglich, dass die am akustooptischen Bauteil kontinuierlich ermittelte Ist-Temperatur in Form eines Steuersignals unmittelbar dem Radiofrequenzgenerator zur Erzeugung der geeigneten Radiofrequenz auf Grundlage der jeweiligen Temperatur am akustooptischen Bauteil zugeführt wird. Der Radiofrequenzgenerator wird dabei über den Prozessor lediglich mit digitalen Information beaufschlagt, wobei die eigentliche Kompensation im Radiofrequenzgenerator stattfindet. In diesem Falle kommuniziert der Prozessor ausschließlich mit dem Radiofrequenzgenerator, wobei der Radiofrequenzgenerator Daten über den Temperatursensor erhält und die erforderliche angepasste Radiofrequenz an den Kristall des akustooptischen Bauteils liefert.

Wie bereits zuvor erwähnt, kann die erfindungsgemäße Vorrichtung zur Steuerung mehrerer akustooptischer Bauteile eingesetzt werden, wobei dann entsprechend der Anzahl der akustooptischen Bauteile Radiofrequenzgeneratoren vorgesehen sind, die über einen gemeinsamen Prozessor mit Steuersignalen zur Erzeugung von Radiofrequenzen auf Grundlage der Temperatur am jeweiligen akustooptischen Bauteil versorgt werden. Entsprechend ist es denkbar, dass unterschiedliche akustooptische Bauteile im System vorgesehen sind, wobei es sich bei dem akustooptischen Bauteil um einen AOTF (acousto optical tunable filter), um einen AOD (acousto optical deflector), um einen AOM (acousto optical modulator) um ein Bauteil innerhalb eines programmierbaren Strahlteilers, d.h. innerhalb eines AOTF, um einen Frequenzschieber oder dgl. handeln kann.

Im Rahmen eines Merge-Moduls kann die Strahlvereinigung und ein AOTF zur Intensitätsregelung dienen, wobei die Bauteile in einem gemeinsamen Gehäuse angeordnet sein können. Auch lassen sich zwei oder mehrere akustooptische Bauteile zu einem AOBS (programmierbarer Strahlteiler) innerhalb eines Gehäuses vereinen.

Entsprechend den voranstehend genannten Merkmalen lassen sich erfindungsgemäße Vorrichtungen betreiben, insbesondere unter Berücksichtigung der beanspruchten Verfahrensschritte.

In Bezug auf mögliche Verwendungen der erfindungsgemäßen Vorrichtung sind keinerlei Grenzen gesetzt. So lässt sich die erfindungsgemäße Vorrichtung beispielsweise zur Temperaturkompensation in einem konfokalen Laserscanmikroskop verwenden. Dabei könnte durch ein erstes akustooptisches Bauteil mit erfindungsgemäßer Temperaturkompensation, vorzugsweise durch ein AOTF, ein Beleuchtungsstrahl geleitet werden. Die Steuereinheit des Konfokalmikroskops steuert dabei neben dem Konfokalmikroskop auch einen oder mehrere Radiofrequenzgeneratoren an, die die akustooptischen Bauteile mit den notwendigen Radiofrequenzen versorgen. Das im ersten akustooptischen Bauteil abgelenkte und selektierte Licht wird vorzugsweise über eine Lichtleiter zum Scankopf des Laserscanmikroskops geleitet, wo es zur Beleuchtung dient.

In besonders vorteilhafter Weise wird das Licht über eine optische Weiche, d.h. über einen akustooptischen Strahlteiler (AOBS), in das Mikroskop eingekoppelt. Die optische Weiche kann ebenfalls die erfindungsgemäße Temperaturkompensation beinhalten, die entsprechend über den Radiofrequenzgenerator vorgenommen wird.

Weitere Anwendungen liegen in der optischen Kohärenztomographie, in der Weißlichtinterferometrie, bei optischen Pinzetten in der Lithographie, in der Entfernungs-/Abstandsmessung, etc.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1    in einer schematischen Ansicht den prinzipiellen Aufbau eines akustooptischen Bauteils und

Fig. 2    in einem schematischen Diagramm die Anwendung der erfindungsgemäßen Vorrichtung am Beispiel eines Konfokalmikroskops, wobei insgesamt drei akustooptische Bauteile Verwendung finden.

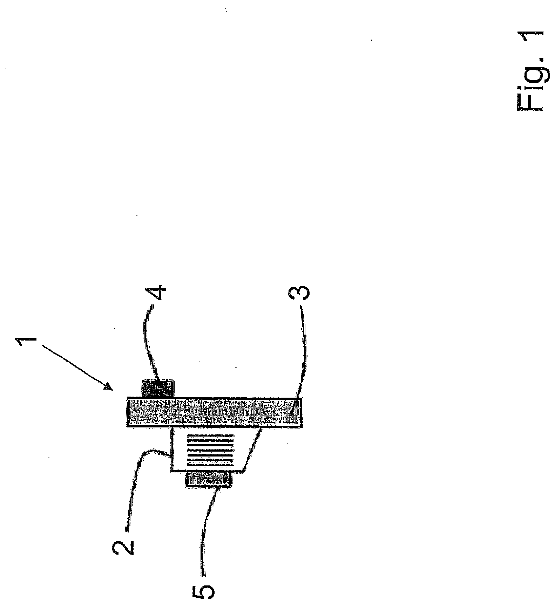

Fig. 1 zeigt in einer schematischen Ansicht den grundsätzlichen Aufbau eines akustooptischen Bauteils 1, welches durch die erfindungsgemäße Vorrichtung in temperaturkompensierender Weise angesteuert wird. Das akustooptische Bauteil 1 umfasst einen akustooptischen Kristall 2, der auf einer Kristallhalterung 3 angeordnet ist. Unmittelbar an der Kristallhalterung 3 ist ein Temperatursensor 4 vorgesehen, der vorzugsweise mit digitalem Ausgang ausgestattet ist. Auf der der Kristallhalterung 3 abgewandten Seite des akustooptischen Kristalls 2 ist ein Transducer 5 zur Einkopplung der Hochfrequenz in den Kristall 2 vorgesehen.

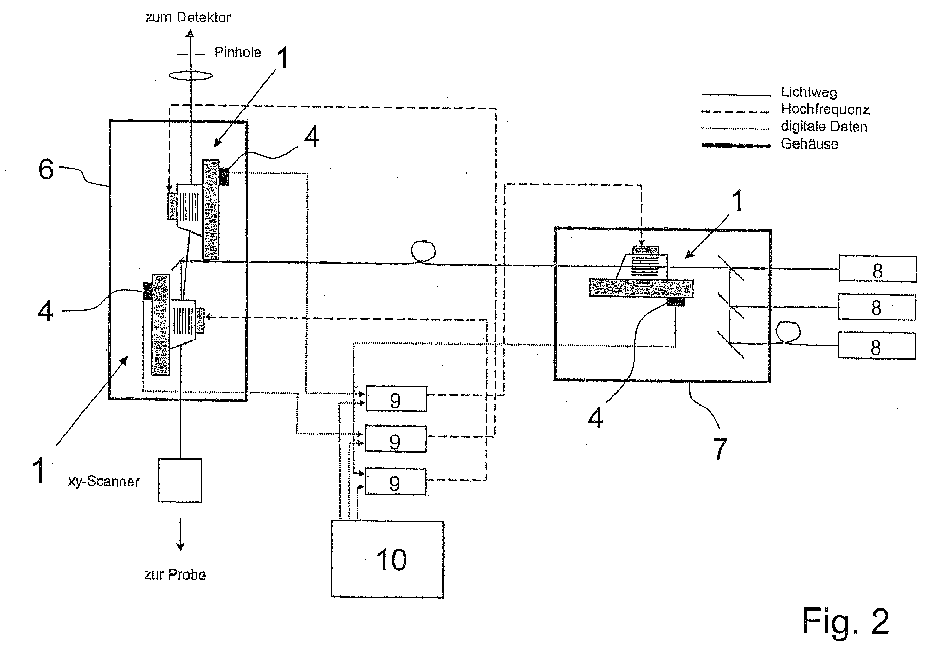

Fig. 2 zeigt in einem schematischen Diagramm die Anwendung einer erfindungsgemäßen Vorrichtung zur Ansteuerung von insgesamt drei akustooptischen Bauteilen 1, wobei zwei der akustooptischen Bauteile 1 einen AOBS 6 bilden und wobei ein weiteres akustooptisches Bauteil 1 in einem Merge-Modul 7 angeordnet ist. Innerhalb des Merge-Moduls 7 dienen die Strahlvereinigung und der AOTF zur Intensitätsregelung des von drei Laserlichtquellen 8 kommenden Laserlichts in einem gemeinsamen Gehäuse.

Zur Ansteuerung der akustooptischen Bauteile 1 sind insgesamt drei Radiofrequenzgeneratoren 9 vorgesehen, die von einem Prozessor 10 bzw. Computer mit einem Steuersignal angesteuert werden.

Die Radiofrequenzgeneratoren 9 erhalten einerseits Steuersignale über den Computer 10 und andererseits temperaturspezifische Signale über die den akustooptischen Bauteilen 1 bzw. den dortigen Kristallen 2 zugeordnete Temperatursensoren 4, so dass im jeweiligen Radiofrequenzgenerator 9 eine Anpassung der Radiofrequenz zur Temperaturkompensation stattfinden kann.

Bei dem in Fig. 2 gezeigten Ausführungsbeispiel erfolgt die Kompensation der temperaturschwankungsbedingten Fehlfunktion des akustooptischen Bauteils 1 im jeweiligen Radiofrequenzgenerator 9, und zwar ausschließlich unter Berücksichtigung der jeweiligen Temperatur am akustooptischen Bauteil 1, unter Berücksichtigung der vom Computer 10 zur Verfügung gestellten Soll-Radiofrequenz, bezogen auf eine definierte Norm-Temperatur am Radiofrequenzgenerator 10. Die reale Temperatur wird kontinuierlich über die Temperatursensoren 4 ermittelt und an den Radiofrequenzgenerator 9 gesendet. Dieser berechnet kontinuierlich neue Werte für die Radiofrequenzen und sendet diese an das zugehörige akustooptische Bauteil 1 bzw. den dortigen Kristall 2.

Schließlich sei daraufhingewiesen, dass das voranstehend erörterte Ausführungsbeispiel lediglich zur beispielhaften Erörterung der beanspruchten Lehre dient, diese jedoch nicht auf das Ausführungsbeispiel einschränkt.

Bezugszeichenliste

1 akustooptisches Bauteil
2 akustooptischer Kristall
3 Kristallhalterung
4 Temperatursensor
5 Transducer
6 AOBS

7 Merge-Modul
8 Laserlichtquelle
9 Radiofrequenzgenerator
10 Prozessor, Computer

## Patentansprüche

**1.** Vorrichtung zur Ansteuerung mehrerer akustooptischer Bauteile (1) zum Beeinflussen hindurchtretenden Lichts, insbesondere zum Beeinflussen des Beleuchtungslichts und/oder des Detektionslichts im Strahlengang eines Mikroskops, insbesondere eines konfokalen Laserscanmikroskops, umfassend:

mehrere Radiofrequenzgeneratoren (9), die entsprechend der Anzahl der akustooptischen Bauteile vorgesehen und ausgebildet sind, das zugehörige akustooptische Bauteil (1) mit der jeweiligen Radiofrequenz zu versorgen,
wobei der jeweilige Radiofrequenzgenerator (9) ausgebildet ist, temperaturschwankungsbedingte Fehlfunktionen des jeweiligen akustooptischen Bauteils (1) durch Anpassung der jeweiligen Radiofrequenz zu kompensieren, mit der das jeweilige akustooptische Bauteil (1) versorgt wird,
wobei der jeweilige Radiofrequenzgenerator (9) ausgebildet ist, die jeweilige Radiofrequenz, ausgehend von einer Soll-Radiofrequenz, in Abhängigkeit von einer unmittelbar am zugehörigen akustooptischen Bauteil (1) ermittelbaren Temperatur, der Ist-Temperatur, anzupassen,
und einen gemeinsamen Prozessor (10), über den die Radiofrequenzgeneratoren (9) mit Steuersignalen zur Erzeugung der Radiofrequenzen auf Grundlage der Ist-Temperatur am jeweiligen akustooptischen Bauteil (1) versorgt werden,
wobei der jeweilige Radiofrequenzgenerator (9) derart ausgebildet ist, dass ihm ein der Ist-Temperatur am zugehörigen akustooptischen Bauteil (1) entsprechendes Signal zuführbar ist,
wobei der jeweilige Radiofrequenzgenerator (9) ausgebildet ist, einen zur Anpassung der jeweiligen Radiofrequenz dienenden Kompensationskoeffizienten in kHz/°C ausschließlich aus der Ist-Temperatur des zugehörigen akustooptischen Bauteils (1) und der Soll-Radiofrequenz zu ermitteln, und
wobei der jeweilige Radiofrequenzgenerator (9) ausgebildet ist, kontinuierlich neue Werte für die Radiofrequenzen zu berechnen und diese an das zugehörige akustooptische Bauteil (1) zu senden.

**2.** Vorrichtung nach Anspruch 1, wobei das jeweilige akustooptische Bauteil (1) einen in den optischen Eigenschaften veränderbaren Kristall (2) umfasst, wobei, ein Temperatursensor (4) vorgesehen ist, über den die Temperatur direkt am Kristall (2) ermittelbar ist.

**3.** Vorrichtung nach Anspruch 1 oder 2, wobei, am jeweiligen akustooptischen Bauteil (1) kontinuierlich die Ist-Temperatur ermittelt und ein der Ist-Temperatur entsprechendes Steuersignal dem Radiofrequenzgenerator (9) zur Erzeugung der Radiofrequenz auf Grundlage der jeweiligen Temperatur am akustooptischen Bauteil (1) zugeführt wird.

**4.** Vorrichtung nach einem der Ansprüche 1 bis 3, wobei, es sich bei dem jeweiligen akustooptischen Bauteil (1) um einen AOTF (acousto optical tunable filter),
einen AOD (acousto optical deflector),
einen AOM (acousto optical modulator),
um ein Bauteil innerhalb eines programmierbaren Strahlteilers oder
um einen Frequenzschieber handelt.

**5.** Verfahren zur Ansteuerung mehrerer akustooptischer Bauteile (1) zum Beeinflussen hindurchtretenden Lichts, insbesondere zum Beeinflussen des Beleuchtungslichts und/oder des Detektionslichts im Strahlengang eines Mikroskops, vorzugsweise eines konfokalen Laserscanmikroskops,
bei dem temperaturschwankungsbedingte Fehlfunktionen des jeweiligen akustooptischen Bauteils (1) durch Anpassung einer jeweiligen Radiofrequenz kompensiert werden,
die Anpassung der jeweiligen Radiofrequenz, ausgehend von einer Soll-Radiofrequenz, in Abhängigkeit von der unmittelbar am zugehörigen akustooptischen Bauteil (1) ermittelbaren Temperatur, der Ist-Temperatur, erfolgt,
wobei, entsprechend der Anzahl der akustooptischen Bauteile (1) Radiofrequenzgeneratoren (9) vorgesehen sind, die jeweils das zugehörige akustooptische Bauteil (1) mit der jeweiligen Radiofrequenz versorgen, wobei die Radiofrequenzgeneratoren (9) über einen gemeinsamen Prozessor (10) mit Steuersignalen zur Erzeugung der Radiofrequenzen auf Grundlage der Temperatur am jeweiligen akustooptischen Bauteil (1) versorgt werden,

dass ein der Ist-Temperatur am zugehörigen akustooptischen Bauteil (1) entsprechendes Signal dem jeweiligen Radiofrequenzgenerator (9) zugeführt wird,

dass ein zur Anpassung der jeweiligen Radiofrequenz dienender Kompensationskoeffizient in kHz/°C ausschließlich aus der Temperatur des zugehörigen akustooptischen Bauteils (1) und der Soll-Radiofrequenz ermittelt wird, und der jeweilige Radiofrequenzgenerator (9) kontinuierlich neue Werte für die Radiofrequenzen berechnet und diese an das zugehörige akustooptische Bauteil (1) sendet.

6. Verfahren nach Anspruch 5, wobei, am jeweiligen akustooptischen Bauteil (1) kontinuierlich die Ist-Temperatur ermittelt und ein der Ist-Temperatur entsprechendes Steuersignal dem Radiofrequenzgenerator (9) zur Erzeugung der Radiofrequenz auf Grundlage der jeweiligen Temperatur am akustooptischen Bauteil (1) zugeführt wird.

7. Verfahren nach Anspruch 5 oder 6, wobei, es in der Weißlichtinterferometrie, bei optischen Pinzetten in der Lithographie, oder bei der Entfernungs-/Abstandsmessung genutzt wird.

**Claims**

1. An apparatus for controlling several acousto-optical components (1) for influencing light passing through, in particular for influencing the illumination light and/or the detection light in the beam path of a microscope, in particular a confocal laser scanning microscope, comprising:

   several radio-frequency generators (9) which are provided in accordance with the number of acousto-optical components and are configured to supply the associated acousto-optical component (1) with the respective radio frequency,

   the respective radio-frequency generator (9) being configured to compensate malfunctions of the respective acousto-optical component (1) caused by temperature fluctuations by adapting the respective radio frequency with which the respective acousto-optical component (1) is supplied,

   the respective radio-frequency generator (9) being configured to adapt the respective radio frequency, starting from a desired radio frequency, depending on a temperature that can be determined directly at the associated acousto-optical component (1), the actual temperature,

   and a common processor (10) via which the radio frequency generators (9) are supplied with control signals for generating the radio frequencies on the basis of the actual temperature at the respective acousto-optical component (1),

   the respective radio-frequency generator (9) being configured such that a signal corresponding to the actual temperature at the associated acousto-optical component (1) may be supplied,

   the respective radio-frequency generator (9) being configured to determine a compensation coefficient in kHz/°C serving to adapt the respective radio frequency exclusively from the actual temperature of the associated acousto-optical component (1) and the desired radio frequency, and

   the respective radio-frequency generator (9) being configured to continuously calculate new values for the radio frequencies and to send these to the associated acousto-optical component (1).

2. The apparatus according to claim 1, wherein the respective acousto-optical component (1) comprises a crystal (2) allowing to change its optical properties, a temperature sensor (4) being provided via which the temperature may be determined directly at the crystal (2).

3. The apparatus according to claim 1 or 2, wherein the actual temperature is continuously determined at the respective acousto-optical component (1) and a control signal corresponding to the actual temperature is sent to the radio-frequency generator (9) for generating the radio frequency on the basis of the respective temperature at the acousto-optical component (1).

4. The apparatus according to one of the claims 1 to 3, wherein the respective acousto-optical component (1) is an AOTF (acousto optical tunable filter),
   an AOD (acousto optical deflector),
   an AOM (acousto optical modulator),
   a component within a programmable beam splitter or a frequency shifter.

5. A method for controlling several acousto-optical components (1) for influencing light passing through, in particular for influencing the illumination light and/or the detection light in the beam path of a microscope, preferably a confocal laser scanning microscope,
in which malfunctions of the respective acousto-optical component (1) caused by temperature fluctuations are compensated by adapting a respective radio frequency, the adaptation of the respective radio frequency, starting from a desired radio frequency, takes place depending on the temperature that can be determined directly at the associated acousto-optical component (1), the actual temperature,
wherein radio-frequency generators (9) are provided corresponding to the number of acousto-optical components (1), which radio-frequency generators respectively supplying the associated acousto-optical component (1) with the respective radio frequency, wherein the radio-frequency generators (9) are supplied via a common processor (10) with control signals for generating the radio frequencies on the basis of the temperature at the respective acousto-optical component (1),
that a signal corresponding to the actual temperature at the associated acousto-optical component (1) is supplied to the respective radio-frequency generator (9),
that a compensation coefficient in kHz/°C serving to adapt the respective radio frequency is determined exclusively from the temperature of the associated acousto-optical component (1) and the desired radio frequency, and
the respective radio-frequency generator (9) continuously calculates new values for the radio frequencies and sends them to the associated acousto-optical component (1).

6. The method according to claim 5, wherein at the respective acousto-optical component (1) the actual temperature is determined continuously and a control signal corresponding to the actual temperature is supplied to the radio-frequency generator (9) for generating the radio frequency on the basis of the respective temperature at the acousto-optical component (1) .

7. The method according to clam 5 or 6, wherein it is used in white light interferometry, in the case of optical tweezers in lithography or in the case of distance measurement.

## Revendications

1. Dispositif permettant de piloter plusieurs composants acousto-optiques (1) pour influencer une lumière traversante, en particulier pour influencer la lumière d'éclairage et/ou la lumière de détection sur la trajectoire des rayons d'un microscope, en particulier d'un microscope confocal à balayage laser, comprenant :

   plusieurs générateurs de radiofréquence (9) qui sont prévus selon le nombre des composants acousto-optiques et sont réalisés pour alimenter en radiofréquence respective le composant acousto-optique (1) associé,
   le générateur de radiofréquence (9) respectif étant réalisé pour compenser des dysfonctionnements, dus à des variations de température, du composant acousto-optique (1) respectif par l'adaptation de la radiofréquence respective qui alimente le composant acousto-optique (1) respectif,
   le générateur de radiofréquence (9) respectif étant réalisé pour adapter la radiofréquence respective, en partant d'une radiofréquence théorique, en fonction d'une température pouvant être établie directement au niveau du composant acousto-optique (1) associé, la température réelle,
   et un processeur (10) commun par lequel les générateurs de radiofréquence (9) sont alimentés en signaux de commande pour produire les radiofréquences sur la base de la température réelle au niveau du composant acousto-optique (1) respectif,
   le générateur de radiofréquence (9) respectif étant réalisé de telle sorte qu'un signal correspondant à la température réelle au niveau du composant acousto-optique (1) associé peut lui être amené,
   le générateur de radiofréquence (9) respectif étant réalisé pour établir un coefficient de compensation en kHz/°C, servant à l'adaptation de la radiofréquence respective, exclusivement à partir de la température réelle du composant acousto-optique (1) associé et de la radiofréquence théorique, et
   le générateur de radiofréquence (9) respectif étant réalisé pour calculer en continu de nouvelles valeurs pour les radiofréquences et pour les envoyer au composant acousto-optique (1) associé.

2. Dispositif selon la revendication 1, dans lequel le composant acousto-optique (1) respectif comprend un quartz (2) à propriétés optiques variables, un capteur de température (4) étant prévu qui permet d'établir la température directement au niveau du quartz (2).

3. Dispositif selon la revendication 1 ou 2, dans lequel, la température réelle est établie en continu au niveau du composant acousto-optique (1) respectif, et un signal de commande correspondant à la température réelle est amené au générateur de radiofréquence (9) pour produire la radiofréquence sur la base de la température respective au niveau du composant acousto-optique (1).

4. Dispositif selon l'une quelconque des revendications 1 à 3, dans lequel le composant acousto-optique (1) respectif est un AOTF (« acousto optical tunable filter »), un AOD (« acousto optical deflector »), un AOM (« acousto optical modulator »), un composant à l'intérieur d'un séparateur de faisceau programmable ou un variateur de fréquence.

5. Procédé permettant de piloter plusieurs composants (1) acousto-optiques pour influencer une lumière traversante, en particulier pour influencer la lumière d'éclairage et/ou la lumière de détection sur la trajectoire des rayons d'un microscope, en particulier d'un microscope confocal à balayage laser,
dans lequel des dysfonctionnements, dus à des variations de température, du composant acousto-optique (1) respectif sont compensés par l'adaptation d'une radiofréquence respective,
l'adaptation de la radiofréquence respective étant effectuée, en partant d'une radiofréquence théorique, en fonction de la température pouvant être établie directement au niveau du composant acousto-optique (1) associé, la température réelle,
dans lequel, selon le nombre des composants acousto-optiques (1), des générateurs de radiofréquence (9) sont prévus qui alimentent respectivement en radiofréquence respective le composant acousto-optique (1) associé, les générateurs de radiofréquence (9) étant alimentés par un processeur commun (10) en signaux de commande pour produire les radiofréquences sur la base de la température au niveau du composant acousto-optique (1) respectif, un signal correspondant à la température réelle au niveau du composant acousto-optique (1) associé étant amené au générateur de radiofréquence (9) respectif,
un coefficient de compensation en kHz/°C, servant à l'adaptation de la radiofréquence respective, étant établi exclusivement à partir de la température du composant acousto-optique (1) associé et de la radiofréquence théorique, et
dans lequel le générateur de radiofréquence (9) respectif calcule en continu de nouvelles valeurs pour les radiofréquences et les envoie au composant acousto-optique (1) associé.

6. Procédé selon la revendication 5, dans lequel la température réelle est établie en continu au niveau du composant acousto-optique (1) respectif, et un signal de commande correspondant à la température réelle est amené au générateur de radiofréquence (9) pour produire la radiofréquence sur la base de la température respective au niveau du composant acousto-optique (1).

7. Procédé selon la revendication 5 ou 6, dans lequel il est utilisé en interférométrie en lumière blanche, pour des pinces optiques en lithographie, ou pour la télémétrie/mesure de distance.

Fig. 1

zum Detektor

Pinhole

1

6

4

4

1

xy-Scanner

zur Probe

Lichtweg
Hochfrequenz
digitale Daten
Gehäuse

1

8

8

8

4

7

9

9

9

10

Fig. 2

EP 2 215 517 B1

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10115488 A1
- EP 0834762 A2
- DE 19827140 C2
- EP 1591825 A
- US 20040105485 A1
- US 4272825 A1